# EUROPEAN PATENT APPLICATION

(11) **EP 4 715 235 A1**
(43) Date of publication of application: **25.03.2026**
(21) Application number: 24202204.4
(22) Date of filing: 24.09.2024
(51) Int. Cl.: F16D 65/12, F16D 65/847, F16D 65/02

(54) **BRAKE DISC ARRANGEMENT WITH ANGLED WALL PORTIONS**

(71) Applicant: Volvo Truck Corporation, 405 08 Göteborg (SE)
(72) Inventor: PARAMASIVAM, Swathi Kumaran, 560075 BANGALORE (IN); AUGUSTSSON, Kent, 517 37 BOLLEBYGD (SE); ANDERSSON, Tobias, 423 38 TORSLANDA (SE); MANI, Boopathy, 422 41 Göteborg (SE); NATARAJAN, Sabtharishiswaran, 418 70 Göteborg (SE); PETERSSON, Martin, 433 68 Sävedalen (SE); SVENSSON, Lars, 415 42 Göteborg (SE); STJÄRNY, Ingela, 423 41 Torslandia (SE)
(74) Representative: Kransell & Wennborg KB

(57) **Abstract**

The present disclosure relates to a brake disc arrangement, comprising a core having a first and a second angled wall portion arranged radially outside an intermediate wall portion to at least partly define a connecting air flow channel, the first angled wall portion extends in the radial direction and in a first direction along the circumference, and the second angled wall portion extends in the radial direction and in a second direction along the circumference, wherein the first direction along the circumference is an opposite direction compared to the second direction along the circumference.

## Description

### TECHNICAL FIELD

The disclosure relates generally to friction wheel brakes. In particular aspects, the disclosure relates to a brake disc arrangement with angled wall portions. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In modern braking systems, brake discs play a critical role in ensuring the safety and performance of vehicles. A typical brake disc arrangement includes an outer braking surface and an inner core. The inner core, often designed to dissipate heat, is crucial for maintaining the structural integrity and performance of the brake disc under high thermal loads. However, during braking, significant heat is generated, particularly at the inner core, which can lead to thermal stress, warping, and reduced braking efficiency over time.

Current brake disc designs often struggle to adequately cool the inner core, leading to uneven temperature distribution and premature wear. Various approaches have been explored to enhance the cooling efficiency, such as increasing the surface area of the disc or using cooling channels. Nevertheless, these solutions may be limited by material constraints, manufacturing complexity, or increased weight. Therefore, there is a need for an improved brake disc arrangement that effectively cools the inner core, ensuring better performance and durability while overcoming the limitations of existing designs.

### SUMMARY

According to a first aspect of the disclosure, there is provided a brake disc arrangement, comprising a core having a first axial end surface and a second axial end surface, the first and second axial end surfaces being configured to connect to a respective first and second friction brake disc, the core comprising a pair of first air inlet channels arranged at the first axial end surface and a second pair air inlet channels arranged at the second axial end surface, the pair of first and second air inlet channels extend into the core in an axial and a radial direction, wherein the respective pair of first and second air inlet channels coincide at a respective first and second axial center portion between the first and second axial end surfaces, the first and second axial center portions being circumferentially offset from each other, wherein the core comprises a first air flow channel extending from the first axial center portion to a first outer radial position of the core, and a second air flow channel extending from the second axial center portion to a second outer radial position of the core, wherein the core further comprises a first and a second connecting air flow channel extending between the first and second air flow channels, the first and second connecting air flow channels being separated by an intermediate wall portion, and wherein the core further comprises a first and a second angled wall portion arranged radially outside the intermediate wall portion to at least partly define the second connecting air flow channel, the first angled wall portion extends in the radial direction and in a first direction along the circumference, and the second angled wall portion extends in the radial direction and in a second direction along the circumference, wherein the first direction along the circumference is an opposite direction compared to the second direction along the circumference.

The brake disc arrangement can be described with reference to a cylindrical coordinate system. As such, an axial direction should preferably be construed as the thickness of the brake disc arrangement, a radial direction should preferably be construed as a direction from a center portion of the brake disc arrangement and a circumferential direction should preferably be construed as rotational direction of the brake disc arrangement.

Further, and as described above, the first and second connecting air flow channels extend between the first and second air flow channels. Hence, the first and second connecting air flow channels each extends in at least a circumferential direction of the brake disc arrangement, whereby air is allowed to flow between the first and second air flow channels via the respective first and second connecting air flow channels.

The first aspect of the present disclosure may seek to solve the problem of insufficient cooling of the core of a brake disc arrangement during operation. A technical benefit may include that the first connecting air flow channel, the second connecting air flow channel and the first and second angled wall portions together allow the flow of air to be distributed within, and through, the core in such a manner that the core is sufficiently cooled. Heat generated during braking may hence be dissipated in a desired manner within the core of the brake disc arrangement. In particular, forming the first and second connecting air flow channels, as well as the first and second angled wall portions, the flow of air entering the core may flow in various directions depending on the rotational speed of the brake disc arrangement. As such, an improved uniform temperature distribution may be obtained.

Additionally, the first and second angled wall portions may have the technical benefit that potential crack propagation inside the core may not extend all the way out to the outer radial position of the core. In detail, in the event of a crack propagation inside the core, the first and/or second angled wall portions stops the crack from further propagating to the radial outer position. The first and second angled wall portions may hereby function as a stop for such potential crack propagation.

Further, by forming the first and second air inlet channels to extend into the core in an axial and a radial direction, and to coincide at an axial center portion, a hill shaped inlet is formed, where air from both an inboard side and an outboard side of the brake disc arrangement can flow into the core. The hill shaped inlet formed by the first and second air inlet channels may also ensure that the core can expand symmetrically during heat up. This may reduce the play in the core which will also reduce judder during braking. It may also reduce the risk for fatigue cracks in the core due to out of plane deformation from the heat. Also, by arranging the first and second inlet channels as a hill shaped inlet, air from e.g. the inboard side is prevented from flowing out at the outboard side. In a similar vein, air entering the core from the outboard side is prevented from flowing out at the inboard side. Hence, all air entering the first and second air inlet channels will flow inside the core and subsequently exit the core at the outer radial position of the core.

Optionally in some examples, including in at least one preferred example, the first and second angled wall portions are circumferentially spaced apart from each other to define an upper air flow channel therebetween. A technical benefit may include that at least a portion of the flow of air that flows in the first and second air flow channels can flow between the first and second angled wall portions, which may further improve the dissipation of heat from the core, i.e. improve the cooling of the core.

Optionally in some examples, including in at least one preferred example, the core further comprises a first radially extending side wall portion, the first air flow channel being at least partly arranged circumferentially between the first radially extending side wall portion and the intermediate wall portion. A technical benefit may include that the flow of air in the first air flow channel can be allowed to flow in the radial direction.

Optionally in some examples, including in at least one preferred example, a first portion of the first angled wall portion circumferentially overlap at least a portion of the first radially extending side wall portion. A technical benefit may include that the flow of air in the first air flow channel may be forced to hit the first angled wall portion when arriving thereto.

Optionally in some examples, including in at least one preferred example, a second portion of the first angled wall portion circumferentially overlap at least a portion of the intermediate wall portion, the second portion of the first angled wall portion being arranged circumferentially closer to the second angled wall portion compared to the first portion of the first angled wall portion. A technical benefit may include that it can be even further assured that the flow of air in the first air flow channel will be forced to hit the first angled wall portion when arriving thereto.

Optionally in some examples, including in at least one preferred example, the second portion of the first angled wall portion is circumferentially non-overlapping with the first radially extending side wall portion.

Optionally in some examples, including in at least one preferred example, a thickness in a circumferential direction of the first radially extending side wall portion is increasing along a radially increasing direction of the core. A technical benefit may include that a width of the first air flow channel is reduced along the direction from the first axial center portion towards the first outer radial position, which may increase the velocity of the air flow in the first air flow channel towards the first outer radial position.

Optionally in some examples, including in at least one preferred example, the first radially extending side wall portion is fully overlapping the intermediate wall portion in the radial direction. A technical benefit may include that the air flow directed into the first air flow channel through the first and second connecting air flow channels will flow in the first air flow channel until exiting the core through the first outer radial position.

Optionally in some examples, including in at least one preferred example, the core further comprising a lower wall portion arranged radially below the intermediate wall portion to at least partly define the first connecting air flow channel. A technical benefit may include that a further wall is provided for allowing air to flow either solely in the first and second air flow channels or to be guided through the first connecting air flow channel.

Optionally in some examples, including in at least one preferred example, the lower wall portion is arranged in an oval shape.

Optionally in some examples, including in at least one preferred example, the core comprises a lower connecting air flow channel extending between the first and second air flow channels, the lower connecting air flow channel being arranged radially below the lower wall portion. A technical benefit may include that a further connecting air flow channel is provided through which air can flow at a rotational speed of the brake disc arrangement that is different compared to the rotational speed when air flows through the respective first and second connecting air flow channels.

Optionally in some examples, including in at least one preferred example, the first air flow channel being at least partly arranged circumferentially between the first radially extending side wall portion and the lower wall portion.

Optionally in some examples, including in at least one preferred example, the intermediate wall portion together with the first angled wall portion and the second angled wall portion form a cow horn shaped wall structure. A technical benefit may include that the flow of air can be allowed to flow outside of the first and second angled wall portions, or between the first and second angled wall portions, thereby enabling for an improved heat dissipation.

Optionally in some examples, including in at least one preferred example, the first angled wall portion extends solely in the radial direction and in the first direction along the circumference as seen in a radially increasing direction of the core.

Optionally in some examples, including in at least one preferred example, the second angled wall portion extends solely in the radial direction and in the second direction along the circumference as seen in a radially increasing direction of the core.

Optionally in some examples, including in at least one preferred example, the core further comprises a second radially extending side wall portion, the second air flow channel being at least partly arranged circumferentially between the second radially extending side wall portion and the intermediate wall portion. A technical benefit may include that the flow of air in the second air flow channel can be allowed to flow in the radial direction.

Optionally in some examples, including in at least one preferred example, the second radially extending side wall portion and the first radially extending side wall portion correspond to each other in shape and size. A technical benefit may include that the core is formed in a uniform and symmetric shape, whereby a uniform heat dissipation may be obtained.

According to a second aspect, there is provided a wheel brake for a vehicle, the wheel brake comprises a brake disc arrangement according to any one of the examples described above in relation to the first aspect.

Effects and features of the second aspect are largely analogous to those described above in relation to the first aspect.

According to a third aspect, there is provided a vehicle comprising a wheel brake according to the second aspect.

Effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary perspective view of a wheel brake according to an example,
Fig. 3A is an exemplary illustration of a core of a brake disc arrangement according to an example,
Fig. 3B is an exemplary cross-section of the core in Fig. 3A according to an example,
Fig. 4 is an exemplary illustration of a core of a brake disc arrangement according to an example, and
Fig. 5 is an exemplary illustrations of air flows inside the core according to an example.

### DETAILED DESCRIPTION

The detailed description set forth below provides information and examples of the disclosed technology with sufficient detail to enable those skilled in the art to practice the disclosure.

The following disclosure aims at providing a brake disc arrangement that at least partly mitigates the problem of insufficient cooling capacity of a core of the wheel brake arrangement during operation. A technical benefit may include that the air flowing in the core can be distributed in a desired manner such that the core can be sufficiently cooled during braking operations.

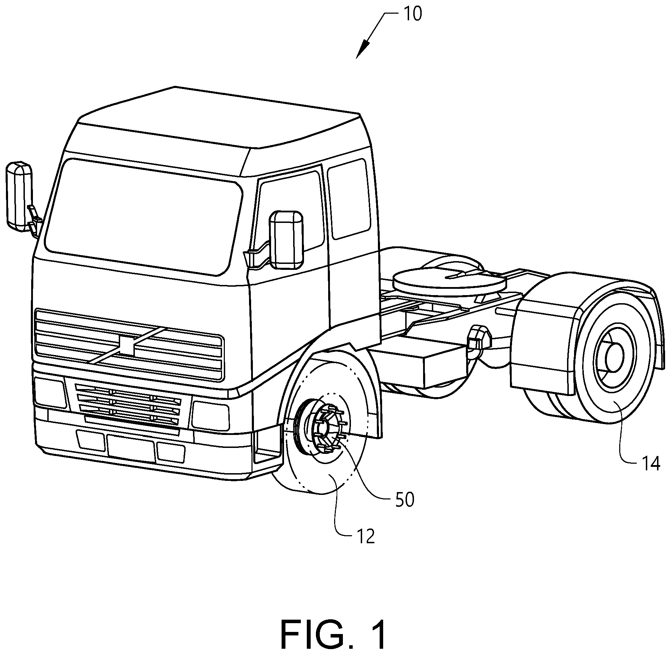

Reference is made to Fig. 1, which is an exemplary illustration of a vehicle 10 according to an example. The exemplified vehicle 10 comprises a pair of front wheels 12 and a pair of rear wheels 14. As can be seen in Fig. 1, the pair of front wheels 12 comprises a wheel brake 50. Even though no wheel brake is illustrated for the pair of rear wheels 14, it should be readily understood that also these wheels may be provided with wheel brakes similar, or different, to the one illustrated. Also, it should be readily understood that the vehicle 10 may comprise another set up of wheels, such as e.g. two pair of rear wheels.

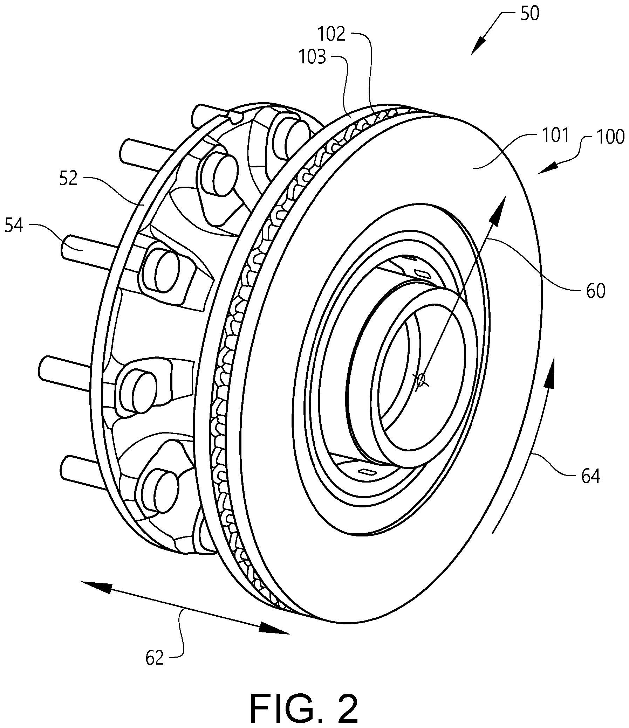

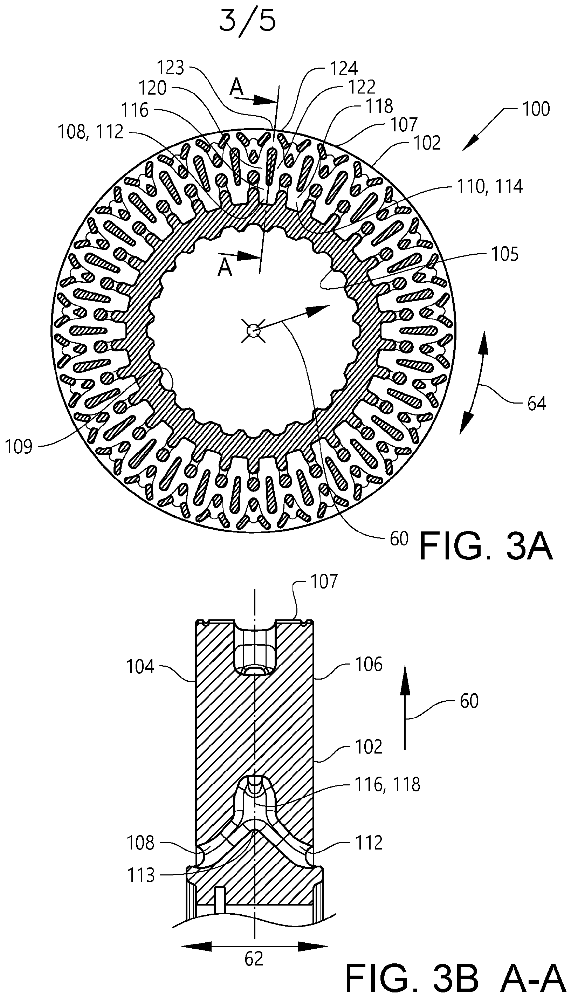

Reference is made to Fig. 2 which is an exemplary perspective view of the wheel brake 50 according to an example. The wheel brake 50 is defined in a cylindrical coordinate system comprising a radial component 60, an axial component 62 and a circumferential component 64. As can be seen, the wheel brake 50 comprises a wheel hub 52 connectable to a wheel axle (not shown) of the vehicle 10 by means of a plurality of bolts 54 or screws. The wheel brake 50 comprises a brake disc arrangement 100. The brake disc arrangement comprises a core 102. The core 102 is connected to the hub 52 such that the core 102 rotates together with the hub 52 in the circumferential direction. According to an example, the core 102 is connected to the hub 52 by a spline or gear teeth interface (109 in Fig. 3A). In such case, the hub comprises a plurality of outward facing splines or gear teeth meshing with a corresponding plurality of inward facing splines or gear teeth of the core 102.

The wheel brake 50 also comprises a first friction brake disc 101 and a second friction brake disc 103. The first 101 and second 103 friction brake discs are connected to the core 102. In particular, the first friction brake disc 101 is connected or attached to the core 102 at an outboard side of the wheel brake 50, while the second friction brake disc 103 is connected or attached to the core 102 at an inboard side of the wheel brake 50. Thus, the first 101 and second 103 friction brake discs are connected or attached to a respective first 104 and second 106 axial end surface of the core 102, which first 104 and second 106 axial end surfaces are illustrated in Fig. 3B. The first 101 and second 103 friction brake discs are arranged to engage with a brake pad (not shown) during braking. When the brake pad engages with the first 101 and second 103 friction brake discs, heat is generated due to the friction between these components.

In order to describe the core 102 in further detail, reference is made to Figs. 3A - 3B, of which Fig. 3A i which is an exemplary illustration of the core 102 of the brake disc arrangement 100 according to an example, and Fig. 3B is an exemplary cross-section of the core 102 in Fig. 3A according to an example. In particular, the exemplary illustration in Fig. 3A illustrates a cross-section of the core 102 in a geometric plane define by the radial 60 and circumferential 64 components of the cylindrical coordinate system, while the exemplary illustration in Fig. 3B illustrates the core 102 in a geometric plane define by the radial 60 and axial 62 components of the cylindrical coordinate system.

As indicated above, the core 102 comprises a first axial end surface 104 at which the first friction brake disc 101 is connectable or attachable, and a second axial end surface 106 at which the second friction brake disc 103 is connectable or attachable. Further, in the radial direction 60, the core 102 extends from an inner radial position 105 to an outer radial position 107. The inner radial position 105 comprises the above described splines or gear teeth interface 109, while the outer radial position 107 is facing the ambient environment of the brake disc arrangement 100, such as e.g. an inner surface of the wheel 12 to which the wheel brake is connected.

As can be seen in Fig. 3B, the core 102 comprises a first air inlet channel 108 which is arranged at the first axial end surface 104 of the core 102, as well as a second air inlet channel 112 which is arranged at the second axial end surface 106 of the core 102. As can be seen in Fig. 3A, the core 102 comprises a pair of first air inlet channels 108, 110 although only one of these first inlet channels is depicted in Fig. 3B. In a similar vein, the core 102 comprises a pair of second air inlet channels 112, 114 although only one of these second inlet channels is depicted in Fig. 3B. As can be seen in Fig. 3B, the first air inlet channel 108 extends from the first axial end surface 104 and into the core 102. In particular, the first air inlet channel 108 extends from the first axial end surface 104 in the axial direction 62 and in an increasing radial direction 60, i.e. in the direction towards the outer radial position 107 of the core 102, to a first axial center portion 116 of the core 102. In a similar manner, the second air inlet channel 112 extends from the second axial end surface 106 in the axial direction 62 and in an increasing radial direction 60, i.e. in the direction towards the outer radial position 107 of the core 102, to the first axial center portion 116 of the core 102. The first 108 and second 112 air inlet channels thus coincide at the first axial center portion 116 of the core 102, i.e. the air entering the first air inlet channel 108 is mixed with the air entering the second air inlet channel 112 at the axial center portion. The first 108 and second 112 air inlet channels thus form a hill shaped portion 113 at a lower radial portion of the core 102. Although the direction of the first and second air inlet channels has been made to the first one 108 of the pair of first inlet channels 108, 110 and the first one 112 of the second pair of air inlet channels 112, 114, a similar or same shape is also valid for the second one 110 of the pair of first air inlet channels 108, 110 and the second one 114 of the pair of second air inlet channels 112, 114. Thus, the core comprises a second axial center portion 118 at which the second one 110 of the pair of first air inlet channels coincide with the second one 114 of the pair of second air inlet channels at a second axial center portion 118 of the core 102. As depicted in Fig. 3A, the first 116 and second 118 axial center portions are offset from each other in the circumferential direction 64 of the core 102.

Furthermore, and as can be seen in Fig. 3A, the core 102 further comprises a first air flow channel 120 and a second air flow channel 122. The first air flow channel 120 extends from the above described first axial center portion 116 to a first outer radial position 123 of the core 102, i.e. extends in at least the radial direction of the core 102. In a similar vein, the second air flow channel 122 extends from the above described second axial center portion 118 to a second outer radial position 124 of the core 102, i.e. extends in at least the radial direction of the core 102. The first 123 and second 124 outer radial positions are offset from each other in the direction along the circumference. The first 120 and second 122 air flow channels are preferably also offset from each other in the direction along the circumference, and may be more or less parallel with each other.

Accordingly, when the brake disc arrangement 100 rotates, air flows into the pair of first air inlet channels 108, 110 as well as into the pair of second air inlet channels 112, 114. The air coincides at the respective first 116 and second 118 axial center portions and is subsequently at least partly directed through the respective first 120 and second 122 air flow channels and exhausted to the ambient at the respective first 123 and second 124 outer radial positions of the core 102.

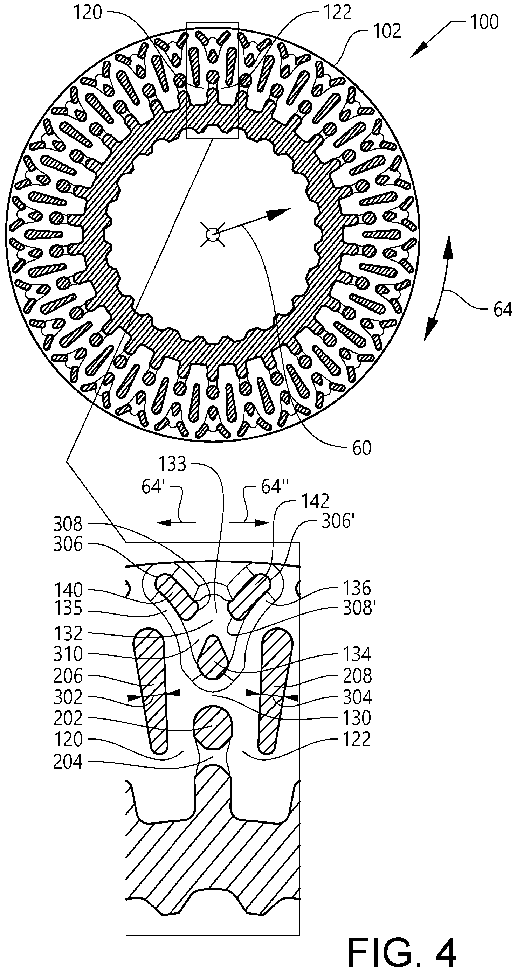

In order to describe further features of the core 102 as well as air flows arranged in the core 102 caused by the features inside the core 102, reference is now made to Fig. 4. Fig. 4 is an exemplary illustration of the core 102 of the brake disc arrangement 100 according to an example, including a detailed cross-section at the axial center portion.

As described above and illustrated in further detail in Fig. 4, the core comprises a first air flow channel 120 as well as a second air flow channel 122. In addition, the core 102 further comprises a first air flow connecting channel 130. The first air flow connecting channel 130 is extending between the first 120 and second 122 air flow channels, at least in a direction along the circumference of the core 102. The first 120 and second 122 air flow channels are hereby arranged in fluid communication with each other via the first air flow connecting channel 130. In further detail, air in the first air flow channel 120 can flow into the second air flow channel 122, or vice versa, via the first air flow connecting channel 130. The first air flow connecting channel 130 is preferably formed between an intermediate wall portion 134 and a lower wall portion 202. The intermediate wall portion 134 and the lower wall portion 202 are both preferably arranged circumferentially between the first 120 and second 122 air flow channels. The lower wall portion 202 may be formed in the illustrated oval shape, while the intermediate wall portion 134 may be formed in a drop shaped configuration.

The core further comprises angled wall portion 140 and a second angled wall portion 142. Both of the first 140 and second 142 angled wall portions are arranged radially outside the intermediate wall portion 134. A second connecting air flow channel 132 is formed radially between the intermediate wall portion 134 and the first 140 and second 142 angled wall portions. Hereby, an opening in the form of the second connecting air flow channel 132 is arranged between the first 120 and second 122 air flow channels. As is also depicted in Fig. 4, the first 140 and second 142 angled wall portions are circumferentially spaced apart from each other. Hereby, an upper air flow channel 133 is formed. Air from both the first 120 and second 122 air flow channels is thus allowed to flow radially through the upper air flow channel 133 and further towards the ambient environment via the second connecting air flow channel 132.

The first angled wall portion 140 has an extension in the radial direction 60 as well as in a first direction 64' along the circumference. In detail, along an increased radial extension of the first angled wall portion 140, the first angled wall portion 140 extends in the first direction 64'. Preferably, the first angled wall portion 140 extends solely in the radial direction and in the first direction along the circumference as seen in a radially increasing direction of the core 102.

In a similar vein, the second angled wall portion 142 has an extension in the radial direction 60 as well as in a second direction 64" along the circumference, where the first 64' and second 64" directions are opposite directions along the circumference. Hence, along an increased radial extension of the second angled wall portion 142, the second angled wall portion 142 extends in the second direction 64". Preferably, the second angled wall portion 142 extends solely in the radial direction and in the second direction along the circumference as seen in a radially increasing direction of the core 102.

Moreover, the core 102 also comprises a first radially extending side wall portion 206, and a second radially extending side wall portion 208. The first radially extending side wall portion 206 is arranged offset from the intermediate wall portion 134 as well as the lower wall portion 202 as seen in the first direction 64' along the circumference, and the second radially extending side wall portion 208 is arranged offset from the intermediate wall portion 134 as well as the lower wall portion 202 as seen in the second direction 64" along the circumference. The first air flow channel 120 is thus at least partly arranged circumferentially between the first radially extending side wall portion 206 and the intermediate wall portion 134. The first radially extending side wall portion 206 may hereby fully overlap the intermediate wall portion 134 in the radial direction. In a similar vein, the second air flow channel being at least partly arranged circumferentially between the second radially extending side wall portion 208 and the intermediate wall portion 134. Thus, also the second radially extending side wall portion 208 may hereby fully overlap the intermediate wall portion 134 in the radial direction. Further, a thickness 302 in a circumferential direction of the first radially extending side wall portion 206 is increasing along a radially increasing direction of the core. The same applies for the second radially extending side wall portion 208, i.e. a thickness 304 in a circumferential direction of the second radially extending side wall portion 208 is increasing along a radially increasing direction of the core. According to the example depicted in Fig. 4, the first radially extending side wall portion 206 and the second radially extending side wall portion 208 may correspond to each other in shape and size.

Turning back to the first 140 and second 142 angled wall portions. A first portion 306 of the first angled wall portion 140 may circumferentially overlap at least a portion of the first radially extending side wall portion 206. A second portion 308 of the first angled wall portion 140 may circumferentially overlap at least a portion of the intermediate wall portion 134. The first 306 and second 308 portions are preferably outer circumferential portions of the first angled wall portion 140. Hence, the second portion 308 of the first angled wall portion 140 is arranged circumferentially closer to the second angled wall portion 142 compared to the first portion 306 of the first angled wall portion 140. The second portion 308 may preferably be non-overlapping with the first radially extending side wall portion 206.

In a similar vein, a first portion 306' of the second angled wall portion 142 may circumferentially overlap at least a portion of the second radially extending side wall portion 208. A second portion 308' of the second angled wall portion 142 may circumferentially overlap at least a portion of the intermediate wall portion 134. The first 306' and second 308' portions are preferably outer circumferential portions of the second angled wall portion 142. Hence, the second portion 308' of the second angled wall portion 142 is arranged circumferentially closer to the first angled wall portion 140 compared to the first portion 306' of the second angled wall portion 142. The second portion 308' may preferably be non-overlapping with the second radially extending side wall portion 208.

As can be seen in Fig. 4, the intermediate wall portion 134 together with the first angled wall portion 140 and the second angled wall portion 142 form a cow horn shaped wall structure. The area 310 formed between the first angled wall portion 140, the second angled wall portion 142 and the intermediate wall portion 134 preferably comprises an increased thickness in the axial direction compared to the thickness of the first 120 and second 122 air flow channels. As such, a first edge 135 is formed in the interface between the first air flow channel 120 and the area 310. The first edge 135 preferably comprises a smooth radius. In a similar vein, a second edge 136 is formed in the interface between the second air flow channel 120 and the area 310. The second edge 136 preferably comprises a smooth radius. The first 135 and second 136 edges may advantageously prevent that thermal cracks propagate out to the outer radial position of the core 102 in the unlikely event that such cracks are formed in the core 102.

Furthermore, the core 102 exemplified in Fig. 4 may also comprise a lower connecting air flow channel 204. The lower connecting air flow channel 204 extends at least circumferentially between the first and second air flow channels, whereby the first and second air flow channels can be arranged in fluid communication with each other via this lower connecting air flow channel 204. Hence, air in the first air flow channel 120 can flow into the second air flow channel 122, or vice versa, via the lower connecting air flow channel 204, which lower connecting air flow channel 204 is arranged radially below the lower wall portion 202.

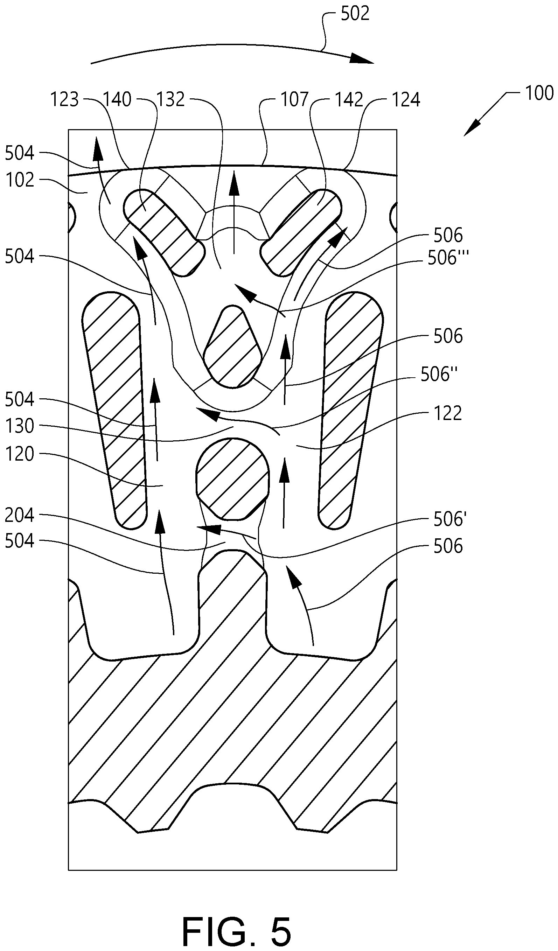

In order to describe potential flow of air inside the core, reference is now made to Fig. 5. In the example depicted in Fig. 5, the brake disc arrangement 100 rotates in the rotational direction depicted with reference numeral 502. As can be seen a first flow of air 504 flows into the first air flow channel 120. The first flow of air 504 follows the first air flow channel 120 and exits the core 102 at the first outer radial position 123 of the core 102. A second flow of air 506 enters the second air flow channel 122. Depending on the rotational velocity of the brake disc arrangement 100, the second flow of air 506 can take different paths before exiting the core at the outer radial position 107. For example, a first portion 506' of the second flow of air 506 can flow through the lower connecting air flow channel 204 and enter the first air flow channel 120. Additionally or alternatively, a second portion 506" of the second flow of air 506 can flow through the first connecting air flow channel 130 and enter the first air flow channel 120. Additionally or alternatively, a third portion 506'" of the second flow of air 506 can flow through the second connecting air flow channel 132 to flow between the first 140 and second 142 angled wall portions before exiting the to the ambient environment outside the core 102. Also, some of the second flow of air 506 can follow the second air flow channel 122 and exit the core 102 at the second outer radial position 124 of the core 102.

The above description in relation to e.g. Figs. 3A - 5 has been made in view of a first and a second air flow channel and wall portions arranged in connection to these first and second air flow channels. It should however be readily understood, as is evident from the figures, that the core may advantageously comprise a plurality of air flow channels and wall portions similar or the same as those described above.

### EXAMPLE LIST

Example 1: A brake disc arrangement, comprising a core having a first axial end surface and a second axial end surface, the first and second axial end surfaces being configured to connect to a respective first and second friction brake disc, the core comprising a pair of first air inlet channels arranged at the first axial end surface and a second pair air inlet channels arranged at the second axial end surface, the pair of first and second air inlet channels extend into the core in an axial and a radial direction, wherein the respective pair of first and second air inlet channels coincide at a respective first and second axial center portion between the first and second axial end surfaces, the first and second axial center portions being circumferentially offset from each other, wherein the core comprises a first air flow channel extending from the first axial center portion to a first outer radial position of the core, and a second air flow channel extending from the second axial center portion to a second outer radial position of the core, wherein the core further comprises a first and a second connecting air flow channel extending between the first and second air flow channels, the first and second connecting air flow channels being separated by an intermediate wall portion, and wherein the core further comprises a first and a second angled wall portion arranged radially outside the intermediate wall portion to at least partly define the second connecting air flow channel, the first angled wall portion extends in the radial direction and in a first direction along the circumference, and the second angled wall portion extends in the radial direction and in a second direction along the circumference, wherein the first direction along the circumference is an opposite direction compared to the second direction along the circumference.

Example 2. The brake disc arrangement of example 1, wherein the first and second angled wall portions are circumferentially spaced apart from each other to define an upper air flow channel therebetween.

Example 3. The brake disc arrangement of any one of examples 1 or 2, wherein the core further comprises a first radially extending side wall portion, the first air flow channel being at least partly arranged circumferentially between the first radially extending side wall portion and the intermediate wall portion.

Example 4. The brake disc arrangement of example 3, wherein a first portion of the first angled wall portion circumferentially overlap at least a portion of the first radially extending side wall portion.

Example 5. The brake disc arrangement of example 4, wherein a second portion of the first angled wall portion circumferentially overlap at least a portion of the intermediate wall portion, the second portion of the first angled wall portion being arranged circumferentially closer to the second angled wall portion compared to the first portion of the first angled wall portion.

Example 6. The brake disc arrangement of example 5, wherein the second portion of the first angled wall portion is circumferentially non-overlapping with the first radially extending side wall portion.

Example 7. The brake disc arrangement of any one of examples 3-6, wherein a thickness in the circumferential direction of the first radially extending side wall portion is increasing along a radially increasing direction of the core.

Example 8. The brake disc arrangement of any one of examples 3 - 7, wherein the first radially extending side wall portion is fully overlapping the intermediate wall portion in the radial direction.

Example 9. The brake disc arrangement of any one of the preceding examples, wherein the core further comprising a lower wall portion arranged radially below the intermediate wall portion to at least partly define the first connecting air flow channel.

Example 10. The brake disc arrangement of example 9, wherein the lower wall portion is arranged in an oval shape.

Example 11. The brake disc arrangement of any one of examples 9 or 10, wherein the core comprises a lower connecting air flow channel extending between the first and second air flow channels, the lower connecting air flow channel being arranged radially below the lower wall portion.

Example 12. The brake disc arrangement of any one of examples 9-11, when dependent on any one of examples 3 - 8, wherein the first air flow channel being at least partly arranged circumferentially between the first radially extending side wall portion and the lower wall portion.

Example 13. The brake disc arrangement of any one of the preceding examples, wherein the intermediate wall portion together with the first angled wall portion and the second angled wall portion form a cow horn shaped wall structure.

Example 14. The brake disc arrangement of any one of the preceding examples, wherein the first angled wall portion extends solely in the radial direction and in the first direction along the circumference as seen in a radially increasing direction of the core.

Example 15. The brake disc arrangement of any one of the preceding examples, wherein the second angled wall portion extends solely in the radial direction and in the second direction along the circumference as seen in a radially increasing direction of the core.

Example 16. The brake disc arrangement of any one of the preceding examples, wherein the core further comprises a second radially extending side wall portion, the second air flow channel being at least partly arranged circumferentially between the second radially extending side wall portion and the intermediate wall portion.

Example 17. The brake disc arrangement of example 16 when dependent on any one of examples 3 - 8, wherein the second radially extending side wall portion and the first radially extending side wall portion correspond to each other in shape and size.

Example 18. A wheel brake for a vehicle, the wheel brake comprises a brake disc arrangement according to any one of the preceding examples.

Example 19. A vehicle comprising a wheel brake according to example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake disc arrangement (100), comprising a core (102) having a first axial end surface (104) and a second axial end surface (106), the first and second axial end surfaces being configured to connect to a respective first and second friction brake disc, the core comprising a pair of first air inlet channels (108, 110) arranged at the first axial end surface (104) and a second pair air inlet channels (112, 114) arranged at the second axial end surface (106), the pair of first (108, 110) and second (112, 114) air inlet channels extend into the core in an axial and a radial direction, wherein the respective pair of first and second air inlet channels coincide at a respective first (116) and second (118) axial center portion between the first and second axial end surfaces, the first (116) and second (118) axial center portions being circumferentially offset from each other, wherein the core comprises a first air flow channel (120) extending from the first axial center portion (116) to a first outer radial position (123) of the core, and a second air flow channel (122) extending from the second axial center portion (118) to a second outer radial position (124) of the core, wherein the core further comprises a first (130) and a second (132) connecting air flow channel extending between the first (120) and second (122) air flow channels, the first and second connecting air flow channels being separated by an intermediate wall portion (134), and wherein the core further comprises a first (140) and a second (142) angled wall portion arranged radially outside the intermediate wall portion (134) to at least partly define the second connecting air flow channel (132), the first angled wall portion extends in the radial direction and in a first direction along the circumference, and the second angled wall portion extends in the radial direction and in a second direction along the circumference, wherein the first direction along the circumference is an opposite direction compared to the second direction along the circumference.

2. The brake disc arrangement of claim 1, wherein the first and second angled wall portions are circumferentially spaced apart from each other to define an upper air flow channel therebetween.

3. The brake disc arrangement of any one of claims 1 or 2, wherein the core further comprises a first radially extending side wall portion (206), the first air flow channel being at least partly arranged circumferentially between the first radially extending side wall portion (206) and the intermediate wall portion (134).

4. The brake disc arrangement of claim 3, wherein a first portion of the first angled wall portion circumferentially overlap at least a portion of the first radially extending side wall portion (206).

5. The brake disc arrangement of claim 4, wherein a second portion of the first angled wall portion circumferentially overlap at least a portion of the intermediate wall portion (134), the second portion of the first angled wall portion being arranged circumferentially closer to the second angled wall portion compared to the first portion of the first angled wall portion.

6. The brake disc arrangement of claim 5, wherein the second portion of the first angled wall portion is circumferentially non-overlapping with the first radially extending side wall portion (206).

7. The brake disc arrangement of any one of claims 3-6, wherein a thickness in a circumferential direction of the first radially extending side wall portion (206) is increasing along a radially increasing direction of the core.

8. The brake disc arrangement of any one of claims 3 - 7, wherein the first radially extending side wall portion (206) is fully overlapping the intermediate wall portion (134) in the radial direction.

9. The brake disc arrangement of any one of the preceding claims, wherein the core further comprising a lower wall portion (202) arranged radially below the intermediate wall portion (134) to at least partly define the first connecting air flow channel (130).

10. The brake disc arrangement of claim 9, wherein the core comprises a lower connecting air flow channel (204) extending between the first (120) and second (122) air flow channels, the lower connecting air flow channel (204) being arranged radially below the lower wall portion (202).

11. The brake disc arrangement of any one of the preceding claims, wherein the intermediate wall portion (134) together with the first angled wall portion and the second angled wall portion form a cow horn shaped wall structure.

12. The brake disc arrangement of any one of the preceding claims, wherein the first angled wall portion extends solely in the radial direction and in the first direction along the circumference as seen in a radially increasing direction of the core.

13. The brake disc arrangement of any one of the preceding claims, wherein the second angled wall portion extends solely in the radial direction and in the second direction along the circumference as seen in a radially increasing direction of the core.

14. A wheel brake for a vehicle, the wheel brake comprises a brake disc arrangement according to any one of the preceding claims.

15. A vehicle comprising a wheel brake according to claim 14.
